# EUROPÄISCHE PATENTSCHRIFT

(11) **EP 3 298 876 B1**
(45) Veröffentlichungstag und Bekanntmachung des Hinweises auf die Patenterteilung: **09.06.2021**
(21) Anmeldenummer: 17168326.1
(22) Anmeldetag: 27.04.2017
(51) Int. Cl.: A01D 43/08

(54) **FELDHÄCKSLER**
FORAGE HARVESTER
RAMASSEUSE-HACHEUSE

(30) Priorität: 21.09.2016 DE 102016117757
(43) Veröffentlichungstag der Anmeldung: 28.03.2018
(73) Patentinhaber: CLAAS Selbstfahrende Erntemaschinen GmbH, 33428 Harsewinkel (DE)
(72) Erfinder: Kriebel, Bastian, 48155 Münster (DE); Bönig, Ingo, 33330 Gütersloh (DE); Cord-Kruse, Christian, 48231 Warendorf (DE); Helal, Tarek, 49078 Osnabrück (DE)
(74) Vertreter: CLAAS Gruppe

(56) Entgegenhaltungen:
- EP-A1- 1 632 131
- EP-A1- 2 965 610
- DE-A1- 19 921 466
- DE-A1-102009 004 821
- DE-A1-102012 017 149

## Beschreibung

Die Erfindung betrifft ein Verfahren zum Betreiben eines Feldhäckslers.

Aus dem Stand der Technik sind eine Vielzahl von Feldhäckslern sowie Verfahren zum Betreiben derselben bekannt. In der DE 102 53 081 A1 ist beispielsweise ein Feldhäcksler beschrieben, dessen Fahrgeschwindigkeit in Abhängigkeit von wenigstens einem Parameter des Ernteguts gesteuert wird und wobei die Steuerung der Fahrgeschwindigkeit wenigstens einen Parameter eines Hauptaggregats und/oder eines Nebenaggregats des Feldhäckslers berücksichtigt.

Ferner ist in der DE 10 2012 017 149 A1 ein Feldhäcksler beschrieben, bei dem die Fahrgeschwindigkeit sowie die Antriebsgeschwindigkeit eines als Erntevorsatz ausgebildeten Eingangsaggregats in Abhängigkeit vom Erntegutdurchsatz variabel sind. Eine unabhängige Regelung des Fahrantriebs und/oder des Eingangsaggregats in Abhängigkeit vom Erntegutdurchsatz kann die Wahrscheinlichkeit einer Überlastung des Versorgungsantriebs reduzieren. Dies gilt insbesondere, wenn auf einem Feld lokal ein dichterer Bestand auftritt und hieraus eine plötzliche Erntegutdurchsatzsteigerung auftritt. Durch eine Reduzierung des Erntegutdurchsatzes durch das Eingangsaggregat kann bei gleichzeitiger Reduzierung der Fahrgeschwindigkeit die auftretende Erntegutdurchsatzspitze abgeflacht und dadurch eine Überlastung des Versorgungsantriebs vermieden werden. Das ist speziell bei aktuellen Feldhäckslern, die regelmäßig an der Leistungsgrenze betrieben werden, von besonderer Bedeutung.

Wird jedoch durch einen Änderungsbefehl zur Verstellung der Betriebsparameter während einer Erntefahrt auf ein nachgelagertes Arbeitsaggregat eingewirkt, kann ein hierdurch auftretender Leistungsmehrbedarf auf die zuvor beschriebene Weise nicht ausgeglichen werden, so dass ein solcher Änderungsbefehl zu einer Überlastung des Versorgungsantriebs führen kann.

Insbesondere eine Änderung der Schnittlänge des Ernteguts ist aufgrund der damit einhergehenden Änderung des Leistungsbedarfs eine besonders kritische Stellgröße, so dass ein obiger Änderungsbefehl zu einer Überlastung des Versorgungsantriebs eines Feldhäckslers führen kann.

Die Druckschrift EP 1632131 A1 offenbart ein Verfahren gemäss dem Oberbegriff von Anspruch 1.

Die Aufgabe der vorliegenden Erfindung ist es daher, ein Verfahren anzugeben, womit sicheres Betreiben des Feldhäckslers auf Änderungsbefehle zur Änderung der Schnittlänge möglich ist und Überlastungen des Versorgungsantriebs wirksam vermieden werden.

Die vorstehend genannte Aufgabe wird durch ein Verfahren gemäss Anspruch 1 gelöst.

Dadurch, dass das Fahrerassistenzsystem auf einen Änderungsbefehl zur Änderung der Schnittlänge des Ernteguts gemäß einer Änderungsbefehl-spezifischen Schnittlängenänderungsstrategie zumindest die Fahrgeschwindigkeit des Feldhäckslers, insbesondere steuernd, ändert und zumindest die Fördergeschwindigkeit des Förderaggregats, insbesondere steuernd, ändert, kann wirksam eine Überlastung des Versorgungsantriebs vermieden werden. In Abhängigkeit von dem Änderungsbefehl zur Änderung der Schnittlänge und ggf. weiterer Parameter kommt also eine geeignete Schnittlängenänderungsstrategie zur Anwendung, um eine Überlastung des Versorgungsantriebs zu vermeiden.

Ein erhöhter Leistungsbedarf des Häckselaggregats, welcher aus einer Änderung der Fördergeschwindigkeit zur Änderung der Schnittlänge resultieren kann, lässt sich durch eine vorausschauende Steuerung der Fahrgeschwindigkeit zumindest teilweise kompensieren. Folglich werden vorzugsweise die Änderung der Fahrgeschwindigkeit und die Änderung der Fördergeschwindigkeit in der Weise von dem Fahrerassistenzsystem miteinander synchronisiert, dass die Antriebsauslastung des Versorgungsantriebs im Wesentlichen konstant gehalten wird.

Gemäß der Erfindung beginnt das Fahrerassistenzsystem auf einen Änderungsbefehl zur Änderung der Schnittlänge des Ernteguts gemäß der Schrittlängenänderungsstrategie mit der Änderung der Fahrgeschwindigkeit des Feldhäckslers, bevor es die Fördergeschwindigkeit des Förderaggregats ändert. Dadurch kann die Schichthöhe im Häckselaggregat vorausschauend verändert werden, um auch bei ggf. anstehenden Lastspitzen bei der Änderung der Schnittlänge keine Überlast in Kauf nehmen zu müssen.

Gemäß Anspruch 2 wird vorgeschlagen, dass das Fahrerassistenzsystem auf einen Änderungsbefehl zur Reduzierung der Schnittlänge des Ernteguts gemäß der Schnittlängenänderungsstrategie die Fahrgeschwindigkeit des Feldhäckslers reduziert. Damit lässt sich vermeiden, dass es zu einem Erntegutstau kommt, der sich durch eine Reduzierung der Schnittlänge ergibt.

Gemäß Anspruch 3 4- kann die Fahrgeschwindigkeit auf einen Anderungsbefehl zur Reduzierung der Schnittlänge des Ernteguts zunächst erhöht werden, bevor sie reduziert wird. Vorzugsweise beginnt die Änderung der Fördergeschwindigkeit des Förderaggregats hier nach dem Beginn der Änderung der Fahrgeschwindigkeit, so dass wiederum eine vorausschauende Einstellung der Schichthöhe am Häckselaggregat stattfinden kann und ein möglichst gleichmäßiger Leistungsbedarf gewährleistet ist.

Zusätzlich oder alternativ kann gemäß Anspruch 4 vorgesehen sein, dass das ¨ Fahrerassistenzsystem auf einen Änderungsbefehl zur Erhöhung der Schnittlänge des Ernteguts gemäß einer Schnittlängenänderungsstrategie die Fahrgeschwindigkeit des Feldhäckslers erhöht, wobei es gemäß Anspruch 5 vorgesehen ist, dass die Fahrgeschwindigkeit zunächst reduziert wird, bevor sie erhöht wird, was wiederum der Vermeidung von Leistungsspitzen dient.

Insbesondere kann gemäß Anspruch 6 auf einen Anderungsbefehl zur Erhöhung der Schnittlänge ein Zeitintervall zwischen dem Beginn der Änderung der Fahrgeschwindigkeit und dem Beginn der Änderung der Fördergeschwindigkeit größer oder gleich der Durchlaufzeit des Ernteguts durch den Erntevorsatz bis zum Förderaggregat sein. Bei einer Synchronisation der Änderung der Fahrgeschwindigkeit und der Änderung der Fördergeschwindigkeit unter diesen Prämissen kann die Antriebsauslastung im Wesentlichen konstant gehalten werden.

Gemäß der Weiterbildung der Erfindung nach Anspruch 7 bestimmt das Fahrerassistenzsystem vor der Änderung der Schnittlänge die aktuelle Antriebsauslastung des Versorgungsantriebs und bestimmt daraufhin die entsprechende Schnittlängenänderungsstrategie. Bei nicht ausreichender Leistungsreserve des Versorgungsantriebs kann gemäß Anspruch 8 zunächst die Fahrgeschwindigkeit und anschließend die Fördergeschwindigkeit des Förderaggregats geändert werden, so dass eine Änderung der Schnittlänge möglich ist, ohne die Leistungsabgabe des Versorgungsantriebs erhöhen zu müssen.

Der Änderungsbefehl zur Änderung, insbesondere Reduzierung und/oder Erhöhung, der Schnittlänge, wird hier und vorzugsweise über eine Benutzerschnittstelle des Feldhäckslers erzeugt (Anspruch 9). Damit ist es dem Benutzer möglich, den Zeitpunkt der Änderung der Schnittlänge individuell zu bestimmen. Zusätzlich oder alternativ kann dieser Änderungsbefehl jedoch auch automatisiert vom Fahrerassistenzsystem selbst erzeugt werden, beispielsweise basierend auf Navigationsdaten o. dgl..

Bei dem Änderungsbefehl zur Änderung der Schnittlänge kann es sich um einen Befehl zum Einstellen auf eine vordefinierte Schnittlänge und/oder um einen Befehl zum Ändern der Schnittlänge um eine vordefinierte Differenz handeln (Anspruch 10).

Im Fahrerassistenzsystem können für die Reduzierung der Schnittlänge gemäß Anspruch 11 Abhängigkeiten, insbesondere Kennlinien und/oder Kennfelder, für das Steuern des Fahrantriebs und/oder des Förderaggregats hinterlegt sein. Genau dies ermöglicht ein vorausschauendes Steuern des Feldhäckslers in einem oberen Antriebsauslastungsbereich.

In einer weiteren Ausgestaltung der Erfindung werden gemäß Anspruch 12 im Fahrerassistenzsystem die obigen Abhängigkeiten während des Betriebs durch das Fahrerassistenzsystem eingelernt, so dass sich das Verhalten des Feldhäckslers im Hinblick auf eine Änderung der Schnittlänge im Laufe des Betriebs optimal auf die gegebenen Umgebungsbedingungen anpasst.

Gemäß Anspruch 13 weist das Fahrerassistenzsystem vorzugsweise eine Grenzlastregelung, insbesondere für eine Leistungsstufe des Antriebs, auf, wobei die Grenzlastregelung die aktuelle Antriebsauslastung, insbesondere durch die Messung von Drehzahl und Antriebsmoment, bestimmt und die Fahrgeschwindigkeit derart steuert und/oder regelt, dass sich ein vorgegebener Arbeitspunkt des Antriebs, insbesondere auch bei einer vorschlagsgemäßen Änderung der Schnittlänge, einstellt.

Im Folgenden wird die Erfindung anhand einer lediglich ein Ausführungsbeispiel darstellenden Zeichnung näher erläutert. In der Zeichnung zeigt
- Fig. 1: eine schematische Darstellung eines vorschlagsgemäßen Feldhäckslers und
- Fig. 2: schematisch ein im Fahrerassistenzsystem hinterlegtes Kennlinienfeld.

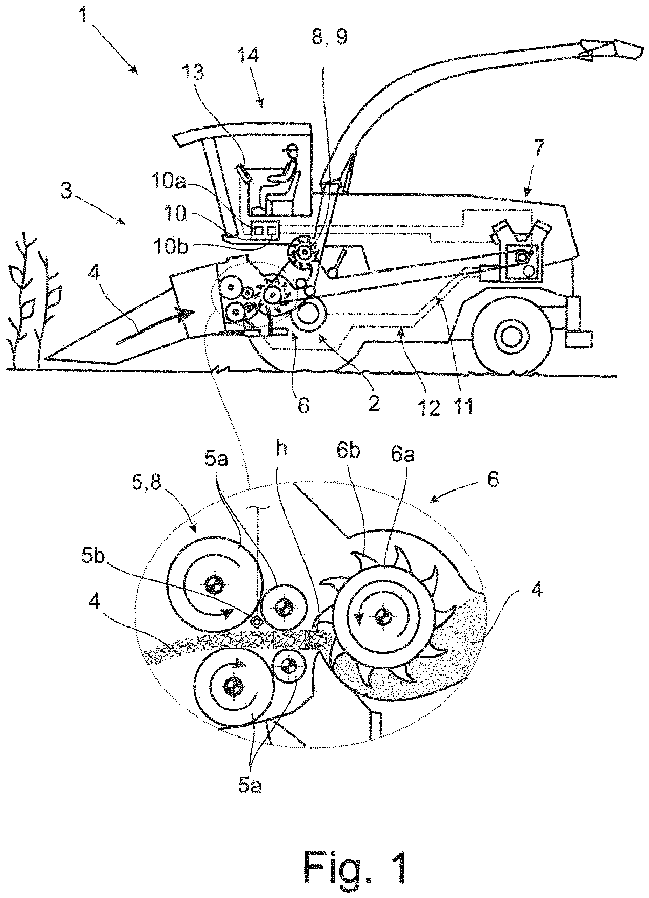

In Fig. 1 ist ein vorschlagsgemäßer Feldhäcksler 1 gezeigt. Dieser weist einen Fahrantrieb 2 für die Fortbewegung des Feldhäckslers 1 und einen Erntevorsatz 3 zum Ernten von Erntegut 4 auf einem Feld auf.

Ferner sind ein Förderaggregat 5 zum Fördern des Ernteguts 4 und ein Häckselaggregat 6 zum Häckseln des Ernteguts 4 auf eine Schnittlänge vorgesehen. Das Erntegut 4 wird von dem Förderaggregat 5 dem Häckselaggregat 6 zugefördert.

Das Förderaggregat 5 ist hier und vorzugsweise im Erntevorsatz 3 aufgenommen. Zum Fördern des Ernteguts 4 weist es vorzugsweise mehrere Förderwalzen 5a, insbesondere vier Förderwalzen 5a, auf. Uber die Leistungszufuhr zu dem Förderaggregat 5 kann die Fördergeschwindigkeit, insbesondere von einem noch zu erläuternden Fahrerassistenzsystem 10, geregelt und/oder gesteuert werden. Zur Bestimmung der Schichthöhe h am Häckselaggregat 6 ist vorzugsweise ein Schichthöhensensor 5b vorgesehen. Zum Häckseln weist das Häckselaggregat 6 vorzugsweise eine Messerwelle 6a mit mehreren Messern 6b auf.

Zur Leistungsversorgung des Fahrantriebs 2, des Förderaggregats 5 und des Häckselantriebs 6 weist der Feldhäcksler 1 einen Versorgungsantrieb 7, insbesondere einen Verbrennungsmotor und/oder einen Hybridmotor, auf. Die Leistungsübertragung vom Versorgungsantrieb 7 zum Fahrantrieb 2 erfolgt vorzugsweise über ein hydraulisches System 11.

Im Ausführungsbeispiel und vorzugsweise werden weitere Arbeitsaggregate 8, wie beispielsweise ein Nachbeschleuniger 9 von dem Versorgungsantrieb 7 mit mechanischer Antriebsleistung versorgt. Der Nachbeschleuniger 9 kann, vorzugsweise gemeinsam mit dem Häckselaggregat 6, über einen Riemen mit mechanischer Antriebsleistung versorgt werden. Die Leistungsversorgung des Häckselaggregats 6 erfolgt hier und vorzugsweise über einen Riementrieb. Das Förderaggregat 5 wird hier und vorzugsweise über ein, insbesondere vom Fahrantrieb 2 separates, hydraulisches System 12 mit Antriebsleistung versorgt.

Zudem weist der Feldhäcksler 1 das obige Fahrerassistenzsystem 10 zum Steuern und ggf. Regeln des Fahrantriebs 2 und des Förderaggregats 5 auf. Darüber hinaus ist das Fahrerassistenzsystem 10 auch zum Steuern und/oder Regeln des Versorgungsantriebs 7 und/oder ggf. weiterer Arbeitsaggregate 8 ausgebildet. Vorzugsweise steuert und/oder regelt das Fahrerassistenzsystem 10 die beschriebenen Arbeitsaggregate 5, 8, 9, zumindest phasenweise, auch abhängig von der vom Schichthöhensensor 5b gemessenen Schichthöhe h.

Das Fahrerassistenzsystem 10 weist vorzugsweise eine Rechenvorrichtung 10b sowie einen der Rechenvorrichtung 10b zugeordneten Speicher 10a auf. Dabei läuft auf der Rechenvorrichtung 10b des Fahrerassistenzsystems 10 in üblicher Weise eine in dem Speicher 10a gespeicherte Software ab.

Vorschlagsgemäß ändert das Fahrerassistenzsystem 10 auf einen Änderungsbefehl zur Änderung der Schnittlänge des Ernteguts 4 gemäß einer Änderungsbefehl-spezifischen Schnittlängenänderungsstrategie zumindest die Fahrgeschwindigkeit des Feldhäckslers 1 und zumindest die Fördergeschwindigkeit des Förderaggregats 5.

In der Schnittlängenänderungsstrategie können unterschiedliche Randbedingungen für die Änderung der Schnittlänge definiert sein. Beispielsweise kann die Schnittlängenänderungsstrategie einen vordefinierten Ablaufplan für die Änderung der Schnittlänge umfassen. Dieser Ablaufplan definiert beispielsweise die Reihenfolge der für die Änderung der Schnittlänge erforderlichen Maßnahmen, insbesondere betreffend eine Änderung der Fahrgeschwindigkeit und der Fördergeschwindigkeit. In der Schnittlängenänderungsstrategie kann alternativ oder zusätzlich die Art und Weise der Änderung der obigen Geschwindigkeiten festgelegt sein. Beispielsweise ist es bevorzugt, dass die Änderung der Geschwindigkeiten kennfeldgesteuert, also basierend auf einem gespeicherten Kennlinienfeld, erfolgt, wie noch im Einzelnen erläutert wird. Grundsätzlich können in der Schnittlängenänderungsstrategie aber auch entsprechende Regelstrategien definiert sein.

Wesentlich ist, dass das Fahrerassistenzsystem 10 der Änderung der Schnittlänge in Abhängigkeit von dem jeweils vorliegenden Änderungsbefehl eine unterschiedliche Schnittlängenänderungsstrategie zugrunde legt. Hierfür kann es vorgesehen sein, dass in dem Speicher 10a des Fahrerassistenzsystems 10 unterschiedliche Schnittlängenänderungsstrategien gespeichert sind. Beispielsweise kann in dem Speicher 10a des Fahrerassistenzsystems 10 eine Bibliothek von Schnittlängenänderungsstrategien abgelegt sein. Es kann aber auch vorgesehen sein, dass in der Speicher 10a des Fahrerassistenzsystems 10 eine einzige Schnittlängenänderungsstrategie gespeichert ist, die von dem Fahrerassistenzsystem 10 in Abhängigkeit von dem jeweiligen Änderungsbefehl parametriert und damit in eine Änderungsbefehl-spezifische Schnittstellenänderungsstrategie überführt wird.

Durch ein vorausschauendes Ändern der Fahrgeschwindigkeit, getriggert durch einen Änderungsbefehl zur Reduzierung der Schnittlänge, kann eine Überlastung des Versorgungsantriebs 7 infolge einer Schnittlängenänderung wirksam vermieden werden. Um dies auch bei unterschiedlichen, die Schnittlänge betreffenden Änderungsbefehlen sicherstellen zu können, legt das Fahrerassistenzsystem 10 der Änderung der Schnittlänge unterschiedliche, Änderungsbefehl-spezifische Schnittlängenänderungsstrategien zu Grunde.

Die Änderung der Fahrgeschwindigkeit und die Änderung der Fördergeschwindigkeit können in diesem Sinne derart miteinander synchronisiert sein, dass eine Überlastung des Versorgungsantriebs 7 vermieden wird. Ein erhöhter Leistungsbedarf, welcher aus der Änderung der Fördergeschwindigkeit zur Änderung der Schnittlänge und der sich hierdurch ändernden Schichthöhe h am Häckselaggregat 6 resultiert, kann durch eine vorrausschauende Steuerung der Fahrgeschwindigkeit zumindest teilweise kompensiert werden. Vorzugsweise werden die Änderung der Fahrgeschwindigkeit und die Änderung der Fördergeschwindigkeit hier in der Weise synchronisiert, dass die Antriebsauslastung im Wesentlichen konstant gehalten wird. Vorzugsweise schwankt die Antriebsdrehzahl während der Schnittlängenverstellung maximal um 10%.

Es gibt Situationen, welche insbesondere bei der Erhöhung der Schnittlänge auftreten, in denen eine Regelung oder Steuerung von Fahrgeschwindigkeit und/oder der Einzugsgeschwindigkeit in Abhängigkeit von Messwerten der Arbeitsorgane und Sensordaten des Arbeitsprozesses mit herkömmlichen Steuerungsstrategien nicht möglich ist, da der Änderungsbefehl unmittelbar eine so stark erhöhte und nicht vorausschauend durch die Messwerte und/oder Sensordaten erfassbare Last bewirkt, dass es zur Überlastung des Versorgungsantriebs 7 kommt. Diese Überlastung erfolgt dann zumeist durch eine plötzliche Erhöhung der Schichthöhe h am Häckselaggregat 6. Durch die vorschlagsgemäße, durch den Änderungsbefehl zur Änderung der Schnittlänge getriggerte Änderung von Fahrgeschwindigkeit und Fördergeschwindigkeit können jedoch die Fahrgeschwindigkeit und Fördergeschwindigkeit auf den Änderungsbefehl hin, insbesondere aufeinander abgestimmt, so geändert werden, so dass es nicht zu einer plötzlichen Lasterhöhung kommt, welche eine Überlastung des Versorgungsantriebs 7 bewirkt.

Das Fahrerassistenzsystem 10 beginnt auf einen Anderungsbefehl zur Änderung der Schnittlänge des Ernteguts 4 gemäß der Änderungsbefehl-spezifischen Schnittlängenänderungsstrategie mit der, insbesondere gesteuerten, Änderung der Fahrgeschwindigkeit des Feldhäckslers 1, bevor es die Fördergeschwindigkeit des Förderaggregats 5, insbesondere steuernd, ändert.

Vorzugsweise reduziert das Fahrerassistenzsystem 10 auf einen Änderungsbefehl zur Reduzierung der Schnittlänge des Ernteguts 4 gemäß der Schnittlängenänderungsstrategie die Fahrgeschwindigkeit des Feldhäckslers 1. Besonders bevorzugt erhöht es die Fahrgeschwindigkeit des Feldhäckslers zunächst, bevor es diese reduziert. Hier und vorzugsweise wird mit der Änderung der Fahrgeschwindigkeit begonnen, bevor die Fördergeschwindigkeit des Förderaggregats 5 reduziert wird. Besonders bevorzugt wird zur Reduzierung der Schnittlänge des Ernteguts 4 zunächst eine negative Beschleunigung des Feldhäckslers 1 eingestellt und erst danach die Fördergeschwindigkeit des Förderaggregats 5 reduziert.

Zusätzlich oder alternativ kann das Fahrerassistenzsystem 10 auf einen Änderungsbefehl zur Erhöhung der Schnittlänge des Ernteguts 4 gemäß der Schnittlängenänderungsstrategie die Fahrgeschwindigkeit des Feldhäckslers 1 erhöhen. Bevorzugt reduziert es diese jedoch zumindest kurzzeitig, bevor es sie erhöht.

Mit der Anderung der Fahrgeschwindigkeit wird begonnen, bevor die Fördergeschwindigkeit des Förderaggregats 5 erhöht wird. Insbesondere kann gemäß einer bevorzugten Ausführung auf einen Änderungsbefehl zur Erhöhung der Schnittlänge ein Zeitintervall zwischen dem Beginn der Änderung der Fahrgeschwindigkeit und dem Beginn der Änderung der Fördergeschwindigkeit größer gleich der Durchlaufzeit des Ernteguts durch den Erntevorsatz 3 bis zum Förderaggregat 5 sein.

Hier und vorzugsweise ist es so, dass das Fahrerassistenzsystem 10 vor der Änderung der Schnittlänge die aktuelle Antriebsauslastung des Versorgungsantriebs 7 bestimmt, den für die Änderung der Schnittlänge benötigten Leistungsbedarf prognostiziert und bei ausreichender Antriebsleistungsreserve des Versorgungsantriebs 7 die Änderung der Schnittlänge zulässt, oder, bei nicht ausreichender Leistungsreserve des Versorgungsantriebs 7 zunächst die Fahrgeschwindigkeit ändert und anschließend die Fördergeschwindigkeit des Förderaggregats 5 ändert. Eine solche Prüfung vor einer Änderung der Schnittlänge muss jedoch nicht zwangsweise vorgenommen werden. Vielmehr kann zusätzlich oder alternativ vorgesehen sein, dass das Fahrerassistenzsystem 10 auf einen Änderungsbefehl zur Änderung der Schnittlänge anhand von in dem Fahrerassistenzsystem 10 abgelegten Steuerungsvorgaben die Fahrgeschwindigkeit des Feldhäckslers 1 ändert und zumindest die Fördergeschwindigkeit des Förderaggregats 5 zur Änderung der Schnittlänge des Ernteguts 4 ändert. Dies erfolgt hier gesteuert durch das Fahrerassistenzsystem 10. Diese Steuerungsvorgaben sind hier Bestandteil der jeweiligen Schnittlängenänderungsstrategie.

Die Steuervorgaben können ein Anpassungsprofil der Fahrgeschwindigkeit und/oder ein Anpassungsprofil der Fördergeschwindigkeit umfassen, basierend auf welchem dann vorzugsweise die Änderung der Fördergeschwindigkeit und/oder die Änderung der Fahrgeschwindigkeit gesteuert wird. Vorzugsweise ist einem Anpassungsprofil der Fördergeschwindigkeit ein Anpassungsprofil der Fahrgeschwindigkeit und/oder einem Anpassungsprofil der Fahrgeschwindigkeit ein Anpassungsprofil der Fördergeschwindigkeit zugeordnet. Dies ermöglicht eine Synchronisation der Änderung der Fahrgeschwindigkeit und der Änderung der Fördergeschwindigkeit.

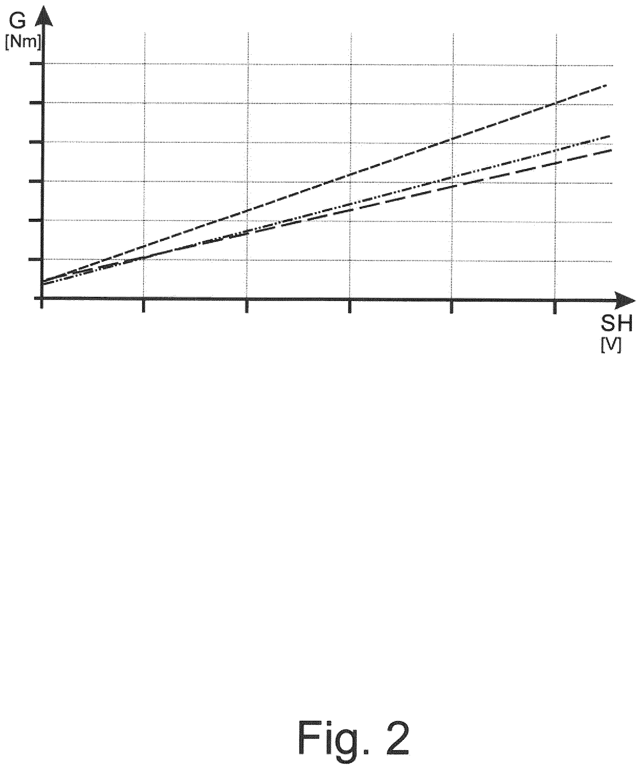

Die Steuerungsvorgaben können auf im Fahrerassistenzsystem 10 hinterlegten Abhängigkeiten, insbesondere Kennlinien und/oder Kennfeldern basieren. Ein Beispiel für solche Kennlinien ist in der Fig. 2 gezeigt, auf welche später noch eingegangen wird. Die Abhängigkeiten, insbesondere Kennlinien und/oder Kennfelder, können die zuvor beschriebenen Anpassungsprofile sein, zusätzlich oder alternativ kann ein Anpassungsprofil bzw. können die Anpassungsprofile vom Fahrerassistenzsystem 10 basierend auf den Abhängigkeiten, insbesondere Kennlinien und/oder Kennfeldern, bestimmt werden.

Ferner weist der Feldhäcksler 1 eine Benutzerschnittstelle 13 zur Eingabe des Änderungsbefehls zur Änderung, insbesondere Reduzierung und/oder Erhöhung, der Schnittlänge auf. Diese ist hier und vorzugsweise in einer Fahrerkabine 14 angeordnet. Zusätzlich oder alternativ kann es auch vorgesehen sein, dass der Änderungsbefehl zur Änderung der Schnittlänge vom Fahrerassistenzsystem 10 erzeugt wird.

Bei diesem Änderungsbefehl handelt es sich hier und vorzugsweise um einen Befehl zum Einstellen auf eine vordefinierte Schnittlänge und/oder um einen Befehl zum Ändern der Schnittlänge um eine vordefinierte Differenz. In diesem Fall werden vorzugsweise die Arbeitsaggregate 8 des Feldhäckslers 1 in der Art und Weise vom Fahrerassistenzsystem 10 eingestellt, dass sich die eingestellte Schnittlänge ergibt.

Das Fahrerassistenzsystem 10 weist wie oben angesprochen vorzugsweise einen Speicher 10a und eine Rechenvorrichtung 10b zur Verarbeitung der in dem Speicher 10a hinterlegten Daten auf. Solche Daten können beispielsweise die eingangs schon beschriebenen Steuerungsvorgaben oder Abhängigkeiten für die Steuerung der Änderung der Schnittlänge für den Fahrantrieb 2 und/oder das Förderaggregat 5 sein. Bei diesen Abhängigkeiten kann es sich insbesondere um Kennlinien oder um Kennfelder handeln. Diese können mehr als zwei oder sogar mehr als drei Dimensionen umfassen.

Hier und vorzugsweise umfassen die im Fahrerassistenzsystem 10 hinterlegten Abhängigkeiten eine Beziehung zwischen dem Leistungsbedarf, insbesondere dem notwendigen Drehmoment zum Häckseln des Ernteguts 4 auf die gewünschte Schnittlänge und der Schichthöhe h, insbesondere im Förderaggregat 5, für verschiedene Schnittlängen.

Solche Kennlinien sind beispielsweise in der Fig. 2 gezeigt. Für verschiedene Schnittlängen ist hier jeweils der Zusammenhang zwischen der auf die Schnittlänge bezogenen Schichthöhe und dem notwendige Prozessmoment gezeigt. Jede der unterschiedlich gestrichelten Kennlinien repräsentiert hier eine andere Schnittlänge.

Die auf die Schnittlänge bezogene Schichthöhe SH ist auf der X-Achse aufgetragen und das notwendige Prozessmoment G ist auf die Y-Achse aufgetragen.

Im Fahrerassistenzsystem 10 sind die Abhängigkeiten, insbesondere die Verläufe der Kennlinien und/oder Kennfelder, hinterlegt. Zusätzlich oder alternativ kann jedoch auch vorgesehen sein, dass das Fahrerassistenzsystem 10 im Betrieb diese Abhängigkeiten einlernt.

Das vorschlagsgemäße Ändern der Schnittlänge des Ernteguts 4 ist besonders vorteilhaft bei einem Fahrerassistenzsystem 10, welches eine Grenzlastregelung, insbesondere für eine Leistungsstufe des Versorgungsantriebs 7, aufweist. Im Grenzlastbetrieb ist das Risiko durch ein plötzliches Verstellen der Schnittlänge, insbesondere sowohl für eine Schnittlängenreduzierung als auch für eine Schnittlängenerhöhung, besonders dazu geeignet, den Versorgungsantrieb 7 zu überlasten, wenn das vorschlagsgemäße Steuern durch das Fahrerassistenzsystem 10 nicht vorgenommen wird.

Die Grenzlastregelung bestimmt vorzugsweise durch Messung von Drehzahl und Antriebsmoment die aktuelle Antriebsauslastung des Versorgungsantriebs 7 und steuert und/oder regelt die Fahrgeschwindigkeit derart, dass sich ein, insbesondere vom Benutzer, vorgegebener Arbeitspunkt des Versorgungsantriebs 7 einstellt. Vorzugsweise kann der vorgegebene Arbeitspunkt des Versorgungsantriebs 7 einer Antriebsdrehzahl zugeordnet sein und unter der Grenzlastregelung die zugeordnete Antriebsdrehzahl vorzugsweise maximal um 10 %, insbesondere maximal um 5 %, überschritten und/oder unterschritten werden.

### Bezugszeichen

- 1: Feldhäcksler
- 2: Fahrantrieb
- 3: Erntevorsatz
- 4: Erntegut
- 5: Förderaggregat
- 5a: Förderwalzen
- 5b: Schichthöhensensor
- 6: Häckselaggregat
- 6a: Messerwelle
- 6b: Messer
- 7: Antrieb
- 8: weitere Aggregate
- 9: Nachbeschleuniger
- 10: Fahrerassistenzsystem
- 10a: Speicher
- 10b: Recheneinrichtung
- 11: hydraulisches System für den Fahrantrieb
- 12: hydraulisches System für das Förderaggregat
- 13: Benutzerschnittstelle
- 14: Fahrerkabine
- h: Schichthöhe

## Patentansprüche

1. Verfahren zum Betreiben eines Feldhäckslers aufweisend einen Fahrantrieb (2) zum Fahren des Feldhäckslers (1), einen Erntevorsatz (3) zum Ernten von Erntegut (4) auf einem Feld, ein Förderaggregat (5) zum Fördern des Ernteguts (4), ein Häckselaggregat (6), dem das Erntegut (4) von dem Förderaggregat (5) zugefördert wird und das das Erntegut (4) auf eine Schnittlänge häckselt, einen Versorgungsantrieb (7) zur Leistungsversorgung des Fahrantriebs (2), des Förderaggregats (5) und des Häckselaggregats (6) und ein Fahrerassistenzsystem (10) zum Steuern und ggf. Regeln des Fahrantriebs (2) und des Förderaggregats (5), wobei das Fahrerassistenzsystem (10) auf einen Anderungsbefehl zur Anderung der Schnittlänge des Ernteguts (4) gemäß einer Änderungsbefehl-spezifischen Schnittlängenänderungsstrategie die Fahrgeschwindigkeit des Feldhäckslers (1) und die Fördergeschwindigkeit des Förderaggregats (5) ändert, **dadurch gekennzeichnet, dass** das Fahrerassistenzsystem (10) auf einen Änderungsbefehl zur Änderung der Schnittlänge des Ernteguts (4) gemäß der Schnittlängenänderungsstrategie mit der Änderung der Fahrgeschwindigkeit des Feldhäckslers (1) beginnt, bevor es die Fördergeschwindigkeit des Förderaggregats (5) ändert.

2. Verfahren nach Anspruch 1, **dadurch gekennzeichnet, dass** das Fahrerassistenzsystem (10) auf einen Änderungsbefehl zur Reduzierung der Schnittlänge des Ernteguts (4) gemäß der Schnittlängenänderungsstrategie die Fahrgeschwindigkeit des Feldhäckslers (1) reduziert.

3. Verfahren nach Anspruch 2, **dadurch gekennzeichnet, dass** dass das Fahrerassistenzsystem (10) auf einen Änderungsbefehl zur Reduzierung der Schnittlänge des Ernteguts (4) gemäß der Schnittlängenänderungsstrategie die Fahrgeschwindigkeit des Feldhäckslers (1) zunächst erhöht, bevor es diese reduziert.

4. Verfahren nach Anspruch 1, **dadurch gekennzeichnet, dass** das Fahrerassistenzsystem (10) auf einen Änderungsbefehl zur Erhöhung der Schnittlänge des Ernteguts (4) gemäß der Schnittlängenänderungsstrategie die Fahrgeschwindigkeit des Feldhäckslers (1) erhöht.

5. Verfahren nach Anspruch 4, **dadurch gekennzeichnet, dass** das Fahrerassistenzsystem (10) auf einen Änderungsbefehl zur Erhöhung der Schnittlänge des Ernteguts (4) gemäß der Schnittlängenänderungsstrategie die Fahrgeschwindigkeit des Feldhäckslers (1) zunächst reduziert, bevor es diese erhöht.

6. Verfahren nach einem der Ansprüche 4 oder 5, **dadurch gekennzeichnet, dass** das Fahrerassistenzsystem (10) auf einen Änderungsbefehl zur Erhöhung der Schnittlänge ein Zeitintervall zwischen dem Beginn der Änderung der Fahrgeschwindigkeit und dem Beginn der Änderung der Fördergeschwindigkeit einstellt, das mindestens der Durchlaufzeit des Ernteguts durch den Erntevorsatz (3) bis zum Förderaggregat (5) entspricht.

7. Verfahren nach einem der vorhergehenden Ansprüche, **dadurch gekennzeichnet, dass** das Fahrerassistenzsystem (10) auf einen Änderungsbefehl zur Änderung der Schnittlänge die aktuelle Antriebsauslastung des Versorgungsantriebs (7) ermittelt und darauf basierend die Schnittlängenänderungsstrategie bestimmt.

8. Verfahren nach Anspruch 7, **dadurch gekennzeichnet, dass** das Fahrerassistenzsystem (10) bei Ermittlung einer Leistungsreserve des Versorgungsantriebs (7) unterhalb eines Grenzwerts eine Schnittlängenänderungsstrategie bestimmt, gemäß der zunächst die Fahrgeschwindigkeit geändert und anschließend Fördergeschwindigkeit des Förderaggregats (5) geändert wird.

9. Verfahren nach einem der vorhergehenden Ansprüche, **dadurch gekennzeichnet, dass** der Feldhäcksler (1) eine Benutzerschnittstelle (13) zur Eingabe des Änderungsbefehls zur Änderung, insbesondere Reduzierung und/oder Erhöhung, der Schnittlänge aufweist.

10. Verfahren nach einem der vorhergehenden Ansprüche, **dadurch gekennzeichnet, dass** der Änderungsbefehl zur Änderung der Schnittlänge ein Befehl zum Einstellen auf eine vordefinierte Schnittlänge ist und/oder dass der Änderungsbefehl ein Befehl zum Reduzieren der Schnittlänge um eine vordefinierte Differenz ist.

11. Verfahren nach einem der vorhergehenden Ansprüche, **dadurch gekennzeichnet, dass** in dem Fahrerassistenzsystem (10) Abhängigkeiten, insbesondere Kennlinien und/oder Kennfelder, für die Steuerung der Änderung der Schnittlänge für den Fahrantrieb (2) und/oder das Förderaggregat (5) hinterlegt sind.

12. Verfahren nach einem der vorhergehenden Ansprüche, **dadurch gekennzeichnet, dass** die im Fahrerassistenzsystem (10) hinterlegten Abhängigkeiten, insbesondere der Verlauf der Kennlinien und/oder Kennfelder, während des Betriebs durch das Fahrerassistenzsystem (10) eingelernt werden.

13. Verfahren nach einem der vorhergehenden Ansprüche, **dadurch gekennzeichnet, dass** das Fahrerassistenzsystem (10) eine Grenzlastregelung, aufweist, dass die Grenzlastregelung die aktuelle Antriebsauslastung bestimmt und die Fahrgeschwindigkeit derart steuert und/oder regelt, dass sich ein vorgegebener Arbeitspunkt des Versorgungsantriebs (7) einstellt.

## Claims

1. A method for operating a forage harvester with a propulsion unit (2) for propelling the forage harvester (1), a harvester front attachment (3) for harvesting harvested crop (4) on a field, a conveying assembly (5) for conveying the harvested crop (4), a chopping assembly (6) to which the harvested crop (4) is conveyed from the conveying assembly (5) and which chops the harvested crop (4) to a cut length, a supply unit (7) for supplying power to the propulsion unit (2), the conveying assembly (5) and the chopping assembly (6), and a driver assistance system (10) for controlling and optionally regulating the propulsion unit (2) and the conveying assembly (5), wherein, upon a change command to change the cut length of the harvested crop (4), the driver assistance system (10) changes the ground speed of the forage harvester (1) and the conveying speed of the conveying assembly (5) in accordance with a change command-specific cut length change strategy, **characterized in that** upon a change command to change the cut length of the harvested crop (4) in accordance with the cut length change strategy, the driver assistance system (10) starts by changing the ground speed of the forage harvester (1) before it changes the conveying speed of the conveying assembly (5).

2. The method according to claim 1, **characterized in that**, upon a change command to reduce the cut length of the harvested crop (4), the driver assistance system (10) reduces the ground speed of the forage harvester (1) in accordance with the cut length change strategy.

3. The method according to claim 2, **characterized in that**, upon a change command to reduce the cut length of the harvested crop (4), the driver assistance system (10) initially increases the ground speed of the forage harvester (1) before it reduces that speed in accordance with the cut length change strategy.

4. The method according to claim 1, **characterized in that**, upon a change command to increase the cut length of the harvested crop (4), the driver assistance system (10) increases the ground speed of the forage harvester (1) in accordance with the cut length change strategy.

5. The method according to claim 4, **characterized in that**, upon a change command to increase the cut length of the harvested crop (4), the driver assistance system (10) initially reduces the ground speed of the forage harvester (1) before it increases that speed in accordance with the cut length change strategy.

6. The method according to one of claims 4 or 5, **characterized in that**, upon a change command to increase the cut length, the driver assistance system (10) sets a time interval between the start of the change to the ground speed and the start of the change to the conveying speed which corresponds to at least the time for the harvested crop to flow through the harvester front attachment (3) to the conveying assembly (5).

7. The method according to one of the preceding claims, **characterized in that**, upon a change command to increase the cut length, the driver assistance system (10) determines the current drive load factor for the supply unit (7) and determines the cut length change strategy on the basis thereof.

8. The method according to claim 7, **characterized in that** when a power reserve for the supply unit (7) is determined which is below a threshold value, the driver assistance system (10) determines a cut length change strategy in accordance with which initially, the ground speed is changed, and subsequently the conveying speed of the conveying assembly (5) is changed.

9. The method according to one of the preceding claims, **characterized in that** the forage harvester (1) has a user interface (13) for inputting the change command for a change to the cut length, in particular a reduction and/or an increase.

10. The method according to one of the preceding claims, **characterized in that** the change command for changing the cut length is a command to set a predefined cut length and/or **in that** the change command is a command to reduce the cut length by a predefined difference.

11. The method according to one of the preceding claims, **characterized in that** functions for controlling the change to the cut length, in particular characteristic curves and/or characteristic maps for the propulsion unit (2) and/or the conveying assembly (5), are stored in the driver assistance system (10).

12. The method according to one of the preceding claims, **characterized in that** while operating, the functions stored in the driver assistance system (10), in particular the profiles for the characteristic curves and/or characteristic maps, are learned by means of the driver assistance system (10).

13. The method according to one of the preceding claims, **characterized in that** the driver assistance system (10) comprises a limiting load control, **in that** the limiting load control determines the current drive load factor and in this manner, the ground speed is controlled and/or regulated such that a predetermined operating point is set for the supply unit (7).

## Revendications

1. Procédé de fonctionnement d'une ensileuse comprenant une transmission (2) pour propulser l'ensileuse (1), un outil frontal (3) pour récolter du produit de récolte (4) dans un champ, un organe d'amenée (5) pour amener le produit de récolte (4), un organe hacheur (6) auquel le produit de récolte (4) est amené par l'organe d'amenée (5) et qui hache le produit de récolte (4) à une longueur de coupe, un moyen d'entraînement d'alimentation (7) pour l'alimentation en puissance de la transmission (2), de l'organe d'amenée (5) et de l'organe hacheur (6) et un système d'assistance à la conduite (10) pour commander et, le cas échéant, réguler la transmission (2) et l'organe d'amenée (5), le système d'assistance à la conduite (10) modifiant la vitesse de marche de l'ensileuse (1) et la vitesse d'amenée de l'organe d'amenée (5) sur une instruction de modification visant à modifier la longueur de coupe du produit de récolte (4) selon une stratégie de modification de longueur de coupe spécifique à une instruction de modification, **caractérisé en ce que** le système d'assistance à la conduite (10) commence à modifier la vitesse de marche de l'ensileuse (1) sur une instruction de modification visant à modifier la longueur de coupe du produit de récolte (4) selon la stratégie de modification de longueur de coupe avant de modifier la vitesse d'amenée de l'organe d'amenée (5) .

2. Procédé selon la revendication 1, **caractérisé en ce que**, sur une instruction de modification visant à réduire la longueur de coupe du produit de récolte (4) selon la stratégie de modification de longueur de coupe, le système d'assistance à la conduite (10) réduit la vitesse de marche de l'ensileuse (1).

3. Procédé selon la revendication 2, **caractérisé en ce que**, sur une instruction de modification visant à réduire la longueur de coupe du produit de récolte (4) selon la stratégie de modification de longueur de coupe, le système d'assistance à la conduite (10) augmente d'abord la vitesse de marche de l'ensileuse (1) avant de la réduire.

4. Procédé selon la revendication 1, **caractérisé en ce que**, sur une instruction de modification visant à augmenter la longueur de coupe du produit de récolte (4) selon la stratégie de modification de longueur de coupe, le système d'assistance à la conduite (10) augmente la vitesse de marche de l'ensileuse (1).

5. Procédé selon la revendication 4, **caractérisé en ce que**, sur une instruction de modification visant à augmenter la longueur de coupe du produit de récolte (4) selon la stratégie de modification de longueur de coupe, le système d'assistance à la conduite (10) réduit d'abord la vitesse de marche de l'ensileuse (1) avant de l'augmenter.

6. Procédé selon une des revendications 4 ou 5, **caractérisé en ce que**, sur une instruction de modification visant à augmenter la longueur de coupe, le système d'assistance à la conduite (10) établit un intervalle de temps entre le début de la modification de la vitesse de marche et le début de la modification de la vitesse d'amenée, lequel correspond au moins au temps de passage du produit de récolte à travers l'outil frontal (3) jusqu'à l'organe d'amenée (5).

7. Procédé selon une des revendications précédentes, **caractérisé en ce que**, sur une instruction de modification visant à modifier la longueur de coupe, le système d'assistance à la conduite (10) détecte la charge d'entraînement instantanée du moyen d'entraînement d'alimentation (7) et, sur la base de celle-ci, détermine la stratégie de modification de longueur de coupe.

8. Procédé selon la revendication 7, **caractérisé en ce que**, en cas de détection d'une réserve de puissance du moyen d'entraînement d'alimentation (7), le système d'assistance à la conduite (10) détermine au-dessous d'une valeur limite une stratégie de modification de longueur de coupe selon laquelle d'abord la vitesse de marche est modifiée et ensuite la vitesse d'amenée de l'organe d'amenée (5) est modifiée.

9. Procédé selon une des revendications précédentes, **caractérisé en ce que** l'ensileuse (1) comporte une interface utilisateur (13) pour entrer l'instruction de modification visant à modifier, en particulier à réduire et/ou à augmenter, la longueur de coupe.

10. Procédé selon une des revendications, **caractérisé en ce que** l'instruction de modification visant à modifier la longueur de coupe est une instruction visant à régler une longueur de coupe prédéfinie et/ou l'instruction de modification est une instruction visant à réduire la longueur de coupe d'une différence prédéfinie.

11. Procédé selon une des revendications précédentes, **caractérisé en ce que** dans le système d'assistance à la conduite (10) sont enregistrées des relations, en particulier des courbes caractéristiques et/ou des diagrammes caractéristiques, pour la commande de modification de la longueur de coupe pour la transmission (2) et/ou pour l'organe d'amenée (5).

12. Procédé selon une des revendications précédentes, **caractérisé en ce que** les relations enregistrées dans le système d'assistance à la conduite (10), en particulier le tracé des courbes caractéristiques et/ou des diagrammes caractéristiques, sont apprises par le système d'assistance à la conduite (10) pendant le fonctionnement.

13. Procédé selon une des revendications précédentes, **caractérisé en ce que** le système d'assistance à la conduite (10) comporte une régulation de charge limite, **en ce que** la régulation de charge limite détermine la charge d'entraînement instantanée et commande et régule la vitesse de marche de façon à établir un point de travail prédéfini du moyen d'entraînement d'alimentation (7).
